# EUROPÄISCHE PATENTSCHRIFT

(11) **EP 2 331 767 B1**
(45) Veröffentlichungstag und Bekanntmachung des Hinweises auf die Patenterteilung: **15.02.2012**
(21) Anmeldenummer: 09775984.9
(22) Anmeldetag: 17.07.2009
(51) Int. Cl.: E04D 3/36, B25B 23/00, E04F 13/08, F16B 13/00

(54) **MODULARES BEFESTIGUNGSELEMENT UND WERKZEUG ZUR VERSCHRAUBUNG DIESES BEFESTIGUNGSELEMENTES**
MODULAR FASTENING ELEMENT AND TOOL FOR ATTACHING SAID FASTENING ELEMENT BY A THREADED CONNECTION
ELÉMENT DE FIXATION MODULAIRE ET OUTIL DE VISSAGE DUDIT ÉLÉMENT DE FIXATION

(30) Priorität: 06.09.2008 DE 202008011932 U
(43) Veröffentlichungstag der Anmeldung: 15.06.2011
(73) Patentinhaber: Harald Zahn GmbH, 69168 Wiesloch (DE)
(72) Erfinder: ZAHN, Harald, 69168 Wiesloch (DE)
(74) Vertreter: Weber, Claus
(86) Internationale Anmeldenummer: PCT/DE2009/001004
(87) Internationale Veröffentlichungsnummer: WO 2010/025693

(56) Entgegenhaltungen:
- EP-A- 1 182 361
- DE-A1- 2 437 308
- DE-A1- 10 118 678
- DE-A1- 19 544 682
- DE-A1-102005 018 178
- US-A- 6 009 779

## Beschreibung

Die Erfindung betrifft ein Modulares Befestigungselement und ein Werkzeug zur Verschraubung dieses Befestigungselementes zur mechanischen Befestigung von Dämmstoffen und Dachabdichtungsbahnen auf Flachdächern gemäß dem Oberbegriff des Hauptanspruchs.

Es ist bekannt, Dämmmaterialien und Abdichtungsbahnen mechanisch auf Flachdächern zu befestigen. Das Dämmmaterial wird auf die tragende Dachkonstruktion, dies kann ein Stahltrapezblech, Holzplatten, Beton, Porenbeton oder Bimsdielen sein, aufgelegt. Gegebenenfalls wird zuvor zwischen tragender Dachkonstruktion und Dämmmaterial eine Dampfsperre verlegt. Das Dämmmaterial wird mit einer Abdichtbahn aus Kunststoff oder Bitumen überdeckt. Die Randseiten der Bahnen werden von den Befestigungselementen durchstochen. Die jeweils für den vorhandenen Dachuntergrund ausgewählte Schraube verankert sich in diesen und das Dämmmaterial nebst Abdichtung wird mit Hilfe eines Lastverteiltellers unter Anpressung mechanisch fixiert. Der so befestigte Dachbahnenrand wird von der benachbarten Dachbahn überlappt und durch Randverschweißung abgedichtet. Ein modulares Befestigungselement der eingangs genannten Art ist aus der DE 10 2005 018 178.3 bekannt. Hier besteht der Kunststoffhalter aus zwei Teilen, dem Hohlschaft und der Kopfplatte, wobei die Kopfplatte und der Hohlschaft z.B. per Gewinde miteinander verbindbar sind. Wenn die vorhandene Dämmstärke nicht bekannt ist, was meist bei Sanierungen der Fall ist, bei denen der alte Dachaufbau erhalten bleibt, ist man mit diesem Element Vorort relativ flexibel, um Differenzen von etwa 0,5 bis 1 cm auszugleichen. Die Einsatzlänge ist allerdings auch bei diesem Befestigungselement insofern begrenzt, als dass die Spritzwerkzeuge nur mit einer begrenzten Spritzstrecke arbeiten können und damit die Länge des grösstmöglichsten Kunststoffhalters begrenzt ist. Zunehmend jedoch werden Bauwerke wegen gesetzlicher Vorgaben mit immer grösseren Dämmstärken versehen, sodass die Anforderungen an überlange Befestigungselemente stetig wächst.

In der DE 101 18 678 wird zur Lösung der Befestigung von nahezu unbegrenzten Aufbaustärken ein Befestigungssystem vorgeschlagen, bei dem das Verankerungselement ein aus Vollmaterial geschaffener Dübel ist. Das Verankerungselement besitzt ein Spannglied aus Draht, das bauseits auf die erforderliche Länge zuschneidbar und in einer Kopfplatte eingespannt ist. Dieses Befestigungssystem wird bevorzugt auf Beton, Porenbeton oder Bimsdielen eingesetzt.

Die Vorhaltung der verschiedensten Befestigungselemente für unterschiedlich hohe Dämmstärken kompliziert die Lagerhaltung und verteuert darüber hinaus die Werkzeugkosten für die benötigten Kunststoffhalter.

Aus der US 6,009,779 A ist ein Werkzeug zur Verschraubung eines modularen Befestigungselementes bekannt, das ein Schrauberbit ist, der aus mindestens zwei miteinander verschraubbaren Teilen, einem Antriebsschaft und einem Abtriebsschaft, gebildet ist.

Dieses Problem wird mit der Erfindung durch die Bereitstellung eines modularen Befestigungselementes mit den Merkmalen des kennzeichnenden Teiles des Hauptanspruchs gelöst.

Der mit Erfindung erzielte Vorteil besteht insbesondere darin, dass mit nur drei Kunststoffmodultypen, und einer auf den jeweiligen Dachuntergrund abgestimmten Schraube bei entsprechend abgestimmter Kombination, Dämmstoffe in unbegrenzter Höhenstärke mechanisch fixiert werden können. Bereits mit der Kombination von zwei erfindungsgemässen Modulen, und zwar einem Modul mit Kopfplatte und einem direkt ohne Zwischenmodul adaptierten Modul mit Schaftspitze, ist es möglich die ersten Anfangsdämmhöhen zu fixieren. Mit zunehmender Dämmstärke werden zusätzliche Modulteile verwendet. Der Einsatz kann nahezu ohne Einschränkung auf jedem Dachuntergrund erfolgen. So ist es möglich, eine Schraube mit Bohrspitze für Stahltrapezbleche, Holzbauschrauben oder Schrauben für Porenbeton, Bimsdielen und Beton einzusetzen. Je nach Untergrund kann die Befestigungsstelle auch vorgebohrt werden. Ebenso kann der erfindungsgemäße Befestiger an der Schaftspitze auch mit einem Vorsatzdübel versehen werden, in den die im letzten Modul befindliche Schraube als Spreizmittel eingreift. Alle Module sind mit Verbindungsmitteln ausgebildet, die eine Adaption der Teile untereinander gestatten. Dabei ist es möglich das Befestigungselement mit nur zwei Kunststoffmodulen und der entsprechenden Schraube zu bilden. Bei höheren Dämmstärken können beliebig viele Zwischenmodule eingesetzt werden, bis die gewünschte Befestigerlänge erreicht ist. Für den Anwender hat die vorliegende Erfindung sowohl Vorteile hinsichtlich seiner Flexibilität als auch finanzieller Art. Insbesondere dann, wenn auf einem Flachdach ein Gefälle aufgebaut wird. Hier kann der Verleger, i.d.R. ein Dachdecker, seinen Befestigerbedarf optimieren. D.h. durch die Möglichkeit der beliebigen Zusammenstellung, können die verwendeten Teile auch für andere Baumaßnahmen verwendet werden. Ein ganz besonderer Vorteil der Erfindung besteht darin, dass die Verbindungsstellen zwischen den einzelnen Modulen zugleich Verstärkungen bilden und damit als axiale Stabilisatoren wirken. Bei einstückigen Befestigungselementen gemäß Stand der Technik aus Kunststoff kann bei bestimmten Überlängen eine Sichelwirkung auftreten. Dies ist durch die Erfindung wegen den v.g. Gründen ausgeschlossen. Bei einer bevorzugten Ausführungsform der Erfindung ist vorgesehen, die miteinander zusammenwirkenden Verbindungsmittel als Außen- bzw. Innengewinde auszubilden.

Alternativ hierzu können auch zusammenwirkende Raster vorgesehen werden. Ebenso können die Verbindungsmittel so ausgestaltet sein, dass an einem Teil eine Ringnut ausgebildet ist, während das gegenüberliegende Teil einen entsprechenden Ring oder beispielsweise mehreren Nasen besitzt und als eine Art Schnappverschluss wirken. Um ein Lösen der Modulverbindung während des Schraubvorgangs zu verhindern, besitzen bei einer besonders bevorzugten Ausführungsform der Erfindung die als Gewinde ausgebildeten Verbindungsmittel ein Linksgewinde. Insbesondere das als Schaftspitze ausgebildete Modul, in dem die Auflageschulter für den Schraubenkopf ausgebildet ist, wäre durch die Drehbewegung der Schraube und der dadurch über den Schraubenkopf übertragenen Radialkräfte von einem Aufdrehen gefährdet. Dies verhindert ein dort befindliches Linksgewinde. Es können erfindungsgemäß auch Rückdrehsicherungen vorgesehen werden. Bei einer bevorzugten Weiterbildung der Erfindung ist vorgesehen, dass die Module bei denen das Verbindungsmittel als Gewinde ausgebildet ist, eine Ver- und Entriegelungssicherung aufweisen. Gebildet wird diese Sicherung bevorzugt durch eine Art Schnappverbindung mit Nocken und Vertiefung, welche auf der axialen Einschraubbahn der Module angeordnet sind. Diese Ausgestaltung bringt auch den Vorteil mit sich, dass das korrekte Zusammenführen zweier Module am Klackgeräusch des in die Vertiefung einschnappenden Nockens festgestellt wird. Gegenüber Lösen der Verbindung wirkt diese Ausgestaltung als Rückdrehsicherung.

Die Erfindung schlägt weiterhin ein Werkzeug zur Verschraubung des modularen Befestigungselementes vor, wobei das Werkzeug ein Schrauberbit ist, der aus mindestens zwei miteinander verschraubbaren Teilen, einem Antriebsschaft und einem Abtriebsschaft besteht. Damit kann ebenso wie das Befestigungselement ein Werkzeug mit individueller Länge gebildet werden.

Weitere Vorteile und vorteilhafte Ausgestaltungen der Erfindung sind der nachfolgenden Beschreibung, der Zeichnung und den Ansprüchen entnehmbar.

Es gibt verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines Ausführungsbeispieles der Erfindung anhand der Zeichnung zu verweisen. In Verbindung mit der Erläuterung des bevorzugten Ausführungsbeispieles der Erfindung an Hand der Zeichnung, werden auch im Allgemeinen bevorzugte Ausgestaltungen und Weiterbildungen der Lehre erläutert.

In der Zeichnung zeigen:
- Figur 1: eine Darstellung des erfindungsgemäßen Befestigungselementes, wobei die Einzelmodule von einander getrennt in koaxialer Anordnung abgebildet sind,
- Figur 2: das erfindungsgemäße Befestigungselement in vormontierter Situation,
- Figur 3: eine Vergrößerung des Gewindebereiches des ersten Moduls
- Figur 4: eine Vergrößerung des Gewindebereiches des zweiten Moduls,
- Figur 5: eine Seitenansicht des Moduls nach Figur 3 und
- Figur 6: ein für die Verschraubung des erfindungsgemäßen Befestigungselementes geeignetes Werkzeug.

Das erfindungsgemäße Befestigungselement setzt sich aus einzelnen Modulen zusammen, die ein beliebig langes Gesamtelement bilden. In dem abgebildeten Ausführungsbeispiel besteht das Befestigungselement aus einem ersten Modul 1, das eine Kopfplatte 11 und einen Hohlschaft 12 aufweist. Die Kopfplatte 11 fungiert als Lastverteilteller. Der Hohlschaft 12 besitzt einen Innenkanal 15, der in die Kopfplatte 11 eintritt und auf dem der Kopfplatte 11 gegenüber liegenden Ende 13 des Hohlschaftes 12 herausführt. An diesem Ende besitzt der Hohlschaft 12 ein Verbindungsmittel 14 in Form eines Außengewindes.

Das zweite verwendete Modul 2 ist als Hohlschaft 21 ausgebildet, der an seinen beiden freien Enden 22,23 Verbindungsmittel 24 und 25 in Form eines Innen- bzw. Außengewindes besitzt. Das dem ersten Modul nahe Ende 22 besitzt eine trichterförmige Aufweitung 26, innerhalb derer ein Innengewinde verläuft. Auf dem gegenüberliegenden Ende 23 das dem Folgemodul zugewiesen ist, besitzt das Modul 2 ein als Außengewinde ausgebildetes Verbindungsmittel 25. Der Hohlschaft 21 ist von einem Innenkanal 27 durchsetzt, der an beiden Enden des Moduls 2 austritt.

Als ein weiteres Modul 3 ist ein Hohlschaft 31 vorgesehen, der an einem freien Ende 32 ein mit dem benachbarten Modul 2 adaptierbares Verbindungsmittel 34 in Form eines Innengewindes besitzt und an seinem gegenüberliegenden Ende 33 als Schaftspitze 35 ausgebildet ist. In dieser ist durch eine Querschnittsverengung des mit 37 bezeichneten Innenkanals eine Auflageschulter 36 ausgebildet. Das dem vorgeordneten Modul nahe Ende 32 besitzt eine trichterförmige Aufweitung 38, innerhalb derer ein Innengewinde verläuft. Hinzu kommt eine Schraube 4, welche in Form und Gewindegeometrie auf den jeweiligen Dachuntergrund ausgebildet ist.

Beim vormontierten Befestigungselement wird die Schraube 4 in das als Schaftspitze 35 ausgebildete Modul 3 eingesetzt, so dass der Schraubenkopf 41 auf der Auflageschulter 36 zu liegen kommt und mit seinem Gewindeschaft 42 aus dem freien Ende der Schaftspitze 35 austritt. Das Modul 3 wird auf das Modul 2 aufgeschraubt, so dass die trichterförmige Aufweitung 38 mit seinem Innengewinde das Ende 23 des Moduls 2 mit seinem Außengewinde umgreift. Ebenso wird zwischen Modul 1 und Modul 2 verfahren. Um die Arbeitslänge des Befestigungselementes zu vergrößern, können beliebig viele ZwischenModule 2 verwendet werden.

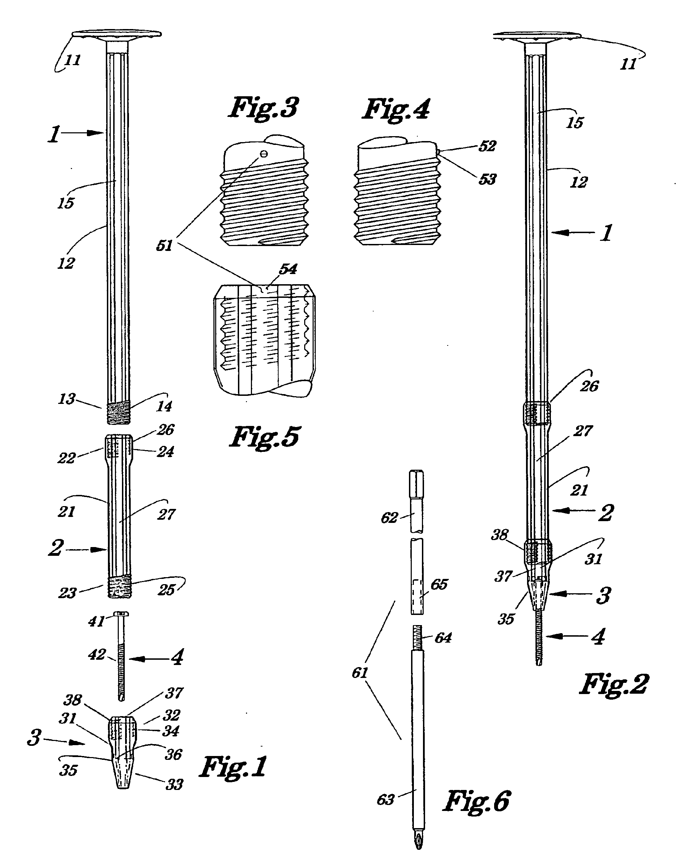

Die Figuren 3 bis 5 zeigen eine besonders bevorzugte Weiterbildung der Erfindung. Kurz oberhalb des Gewindes des Moduls 1 ist auf dessen Außenumfang ein Nocken 52 angeordnet. Das Modul 2 trägt auf seiner Innenwand eine mit dem Nocken 52 korrespondierende Vertiefung 54. Beide Teile, die zusammen eine mit 51 bezeichnete Ver- und Entriegelungssicherung bilden, sind so auf den Modulen angeordnet, dass der jeweilige Nocken 52 dann in die Vertiefung einrastet, wenn beim Verschrauben beider Teile der letzte Gewindegang erreicht ist. Dem Anwender bzw. der Person, welche die Bestückung der Module vornimmt, wird dabei durch ein deutliches Klacken signalisiert, dass eine ausreichende Verschraubung erfolgt ist. Damit ist zum einen eine verlässliche Verriegelungssicherung geschaffen. Andererseits bildet der in der Vertiefung befindliche Nocken auch eine Rückdrehsicherung.

Figur 6 zeigt das vorgeschlagene Werkzeug 61. Es besteht in diesem Ausführungsbeispiel aus zwei Teilen, dem Antriebsschaft 62 mit Sechskant und dem Abtriebsschaft 63, beispielsweise einem Kreuzschlitzantrieb PH 2. Beide Teile sind miteinander verschraubt, wobei hier der Abtriebsschaft 63 einen Gewindezapfen 64 und der Antriebsschaft 62 ein Innengewinde 65 besitzt.

Mit der Erfindung wird erzielt, dass nur noch drei Spritzwerkzeuge für die Kunststoffteile erforderlich sind und damit jede Dämmstärke mechanisch befestigt werden kann, weil Befestigungselemente von beliebiger Länge gebildet werden können.

### Bezugszeichenliste

- 1: Modul
- 2: Modul
- 3: Modul
- 4: Schraube

- 11: Kopfplatte von 1
- 12: Hohlschaft von 1
- 13: freies Ende von 1
- 14: Verbindungsmittel von 1
- 15: Innenkanal von 1

- 21: Hohlschaft von 2
- 22: freies Ende von 2
- 23: freies Ende von 2
- 24: Verbindungsmittel von 2
- 25: Verbindungsmittel von 2
- 26: trichterförmige Aufweitung von 2
- 27: Innenkanal von 2

- 31: Hohlschaft von 3
- 32: freies Ende von 3
- 33: Freies Ende von 3
- 34: Verbindungsmittel von 3
- 35: Schaftspitze von 3
- 36: Auflageschulter in 3
- 37: Innenkanal von 3

- 41: Kopf von 4
- 42: Gewindeschaft von 4

- 51: Ver- und Entriegelungssicherung
- 52: Nocken
- 53: Anlaufschräge
- 54: Vertiefung

- 61: Werkzeug
- 62: Antriebsschaft
- 63: Abtriebsschaft
- 64: Gewindezapfen
- 65: Innengewinde

## Patentansprüche

1. Modulares Befestigungselement zur mechanischen Befestigung von Dämmstoffen und Dachabdichtungsbahnen auf Flachdächern, bestehend aus einem Kunststoffhalter mit Kopfplatte und Hohlschaft und einer im Hohlschaft (12) versenkt aufgenommenen Schraube (4), welche mit ihrem Schraubenkopf (41) auf einer Auflageschulter (36) nahe der Schaftspitze (35) des Kunststoffhalters aufsitzt und mit ihrem Gewinde (42) aus der Schaftspitze (35) des Hohlschaftes austritt und unter Anpressung des Dämmstoffes und der Dachabdichtungsbahn in den Dachuntergrund eingreift, wobei der Kunststoffhalter aus mindestens zwei koaxial miteinander adaptierbaren Modulen (1, 2) besteht,
**dadurch gekennzeichnet,**
**dass** das erste Modul (1) aus einer Kopfplatte (11) und einem Hohlschaft (12) besteht und der Hohlschaft (12) an seinem der Kopfplatte (11) fernen Ende (13) ein mit einem Folgemodul (2) (3) adaptierbares Verbindungsmittel (14) besitzt, dass ein weiteres Modul (2) ein Hohlschaft (21) ist, der an seinen beiden freien Enden (22) (23) ein mit einem jeweils benachbarten Modul (1) (3) adaptierbares Verbindungsmittel (24) (25) aufweist und dass ein weiteres Modul (3) ein Hohlschaft (31) ist der an einem freien Ende (34) ein mit dem benachbarten ersten (1) und/oder zweiten Modul (2) adaptierbares Verbindungsmittel (34) besitzt und an seinem gegenüberliegenden Ende (33) als Schaftspitze (35) ausgebildet ist, in der die Auflageschulter (36) für den Schraubenkopf (41) der Schraube (4) ausgebildet ist.

2. Modulares Befestigungselement nach Anspruch 1, **dadurch gekennzeichnet, dass** das Verbindungsmittel (14, 24, 25 und/oder 34) jeweils als Gewinde ausgebildet ist.

3. Modulares Befestigungselement nach mindestens einem der vorstehenden Ansprüche, **dadurch gekennzeichnet, dass** das Verbindungsmittel (14 und 25) jeweils ein Außengewinde und das Verbindungsmittel (24 und 34) jeweils als Innengewinde ausgebildet ist.

4. Modulares Befestigungselement nach mindestens einem der vorstehenden Ansprüche, **dadurch gekennzeichnet, dass** das Verbindungsmittel (14, 24, 25 und/oder 34) jeweils als Raster ausgebildet ist.

5. Modulares Befestigungselement nach mindestens einem der vorstehenden Ansprüche, **dadurch gekennzeichnet, dass** das Verbindungsmittel (14 und 25 oder 24 und 34) jeweils eine Nut und das Verbindungsmittel (24 und 34 oder 14 und 25) jeweils als Nase oder Ring ausgebildet ist.

6. Modulares Befestigungselement nach mindestens einem der vorstehenden Ansprüche, **dadurch gekennzeichnet, dass** das als Gewinde ausgebildete Verbindungsmittel ein Linksgewinde ist.

7. Modulares Befestigungselement nach mindestens einem der vorstehenden Ansprüche, **dadurch gekennzeichnet, dass** die Module bei denen das Verbindungsmittel als Gewinde ausgebildet ist, eine Ver- und Entriegelungssicherung (51) aufweisen.

8. Modulares Befestigungselement nach mindestens einem der vorstehenden Ansprüche, **dadurch gekennzeichnet, dass** die Ver- und Entriegelungssicherung (51) durch eine in der axialen Einschraubbahn der Module befindlichen Schnappverbindung gebildet ist.

9. Modulares Befestigungselement nach mindestens einem der vorstehenden Ansprüche, **dadurch gekennzeichnet, dass** die Schnappverbindung durch jeweils eine Vertiefung und jeweils einem Nocken auf den benachbarten Wandflächen der zu verbindenden Module gebildet ist.

10. System bestehend aus einem modularen Befestigungselement nach mindestens einem der Ansprüche 1-9 und einem Werkzeug zur Verschraubung des modularen Befestigungselementes, wobei das Werkzeug (61) ein Schrauberbit ist, der aus mindestens zwei miteinander verschraubbaren Teilen, einem Antriebsschaft (62) und einem Abtriebsschaft (63) besteht.

## Claims

1. Modular fastening element for the mechanical attachment of insulating materials and roof sealing strips on flat roofs, consisting of a plastic holder with a head plate and a hollow shaft and a screw (4) held inserted into the hollow shaft (12), wherein said screw rests with its head (41) on a support shoulder (36) near the tip (35) of the shaft of the plastic holder and with its thread (42) projecting from the shaft tip (35) of the hollow shaft and pierces the roof subsurface as it is pushed into the insulating material and the roof sealing strip, whereby the plastic holder consists of at least two modules (1, 2) adaptable coaxially in relation to each other, **characterised in that**, the first module (1) consists of a head plate (11) and a hollow shaft (12) and, at its end (13) furthest from the head plate (11), the hollow shaft (12) has an attachment means (14) adaptable with an extension module (2) (3), that a further module (2) is a hollow shaft (21) which, at its two free ends (22) (23) has an attachment means (24) (25) adaptable with an adjacent module (1) (3) in each case respectively, and that a further module (3) is a hollow shaft (31) which, at one free end (34) has an attachment means (34) adaptable with the adjacent first (1) and/or second module (2) and, at its opposite end (33), is formed as a shaft tip (35) in which the support shoulder (36) for the head (41) of the screw (4) is formed.

2. Modular fastening element in accordance with claim 1, **characterised in that** the attachment means (14, 24, 25 and/or 34) are formed respectively as a thread.

3. Modular fastening element in accordance with at least one of the preceding claims, **characterised in that** the attachment means (14 and 25) are formed respectively as an external thread and the attachment means (24 and 34) are formed respectively as an internal thread.

4. Modular fastening element in accordance with at least one of the preceding claims, **characterised in that** attachment means (14, 24, 25 and/or 34) are formed respectively as a latch.

5. Modular fastening element in accordance with at least one of the preceding claims, **characterised in that** attachment means (14 and 25 or 24 and 34) are formed respectively as a groove and the attachment means (24 and 34 or 14 and 25) are formed respectively as a lug or ring.

6. Modular fastening element in accordance with at least one of the preceding claims, **characterised in that** the attachment means formed as a thread have a left-hand thread.

7. Modular fastening element in accordance with at least one of the preceding claims, **characterised in that** the modules in which the attachment means are formed as a thread have a locking and release device (51).

8. Modular fastening element in accordance with at least one of the preceding claims, **characterised in that** the locking and release device (51) is formed by a snap connection located in the axial screw-in path of the modules.

9. Modular fastening element in accordance with at least one of the preceding claims, **characterised in that** the snap connection is formed in each case by a recess and a corresponding cam on the face of the adjacent walls of the modules requiring fastening.

10. System consisting of a modular fastening element according to at least one of the claims 1 to 9 and a tool for screwing the modular fastening element, wherein the tool (61) is a bit for a screw driver which comprises at least two parts, a drive shaft (62) and a driven shaft (63), which can be screwed together.

## Revendications

1. Élément de fixation modulaire pour la fixation mécanique de matériaux isolants et de lés d'étanchéité de toiture sur des toitures plates, formé d'un logement en plastique comprenant une plaque de tête et une tige creuse et d'une vis (4) qui est reçue de manière noyée dans la tige creuse (12), qui s'appuie, avec sa tête de vis (41), sur un épaulement d'appui (36) proche de la pointe de tige (35) du logement en plastique, dont le filet (42) sort de la pointe de tige (35) de la tige creuse et qui s'engage dans la sous-structure du toit tout en pressant le matériau isolant et le lé d'étanchéité de toiture, le logement en plastique étant formé d'au moins deux modules (1, 2) pouvant être adaptés coaxialement l'un à l'autre, **caractérisé en ce que** le premier module (1) est formé d'une plaque de tête (11) et d'une tige creuse (12) et la tige creuse (12) est pourvue, au niveau de son extrémité (13) éloignée de la plaque de tête (11), d'un moyen de liaison (14) pouvant être adapté à un module consécutif (2) (3), **en ce qu'**un module supplémentaire (2) est une tige creuse (21) qui est pourvue, à ses deux extrémités libres (22) (23), d'un moyen de liaison (24) (25) pouvant être adapté avec un module voisin respectif (1) (3) et **en ce qu'**un module supplémentaire (3) est une tige creuse (31) qui est pourvue, au niveau d'une extrémité libre (34), d'un moyen de liaison (34) pouvant être adapté avec le premier (1) et/ou le deuxième module voisin (2) et qui est exécutée, au niveau de son extrémité opposée (33), en tant que pointe de tige (35) dans laquelle l'épaulement d'appui (36) pour la tête de vis (41) de la vis (4) est exécuté.

2. Élément de fixation modulaire selon la revendication 1, **caractérisé en ce que** le moyen de liaison (14, 24, 25 et/ou 34) est exécuté à chaque fois en tant que filetage.

3. Élément de fixation modulaire selon au moins une des revendications précédentes, **caractérisé en ce que** le moyen de liaison (14 et 25) est à chaque fois un filet extérieur et le moyen de liaison (24 et 34) est exécuté à chaque fois en tant que taraudage.

4. Élément de fixation modulaire selon au moins une des revendications précédentes, **caractérisé en ce que** le moyen de liaison (14, 24, 25 et/ou 34) est exécuté à chaque fois en tant que moyen d'encliquetage.

5. Élément de fixation modulaire selon au moins une des revendications précédentes, **caractérisé en ce que** le moyen de liaison (14 et 25 ou 24 et 34) est à chaque fois une rainure et le moyen de liaison (24 et 34 ou 14 et 25) est exécuté à chaque fois en tant que came ou bague.

6. Élément de fixation modulaire selon au moins une des revendications précédentes, **caractérisé en ce que** le moyen de liaison exécuté en tant que filetage est un filetage à gauche.

7. Élément de fixation modulaire selon au moins une des revendications précédentes, **caractérisé en ce que** les modules sur lesquels le moyen de liaison est exécuté en tant que filetage sont pourvus d'un dispositif d'arrêt de verrouillage et de sécurité anti-déverrouillage (51).

8. Élément de fixation modulaire selon au moins une des revendications précédentes, **caractérisé en ce que** le dispositif d'arrêt de verrouillage et de sécurité anti-déverrouillage (51) est formé par une liaison par encliquetage située dans la cheminée de vissage axial des modules.

9. Élément de fixation modulaire selon au moins une des revendications précédentes, **caractérisé en ce que** la liaison par encliquetage est formée par un creux d'une part et une saillie d'autre part sur les surfaces de paroi contiguës des modules à assembler.

10. Système formé d'un élément de fixation modulaire selon au moins une des revendications 1-9 et d'un outil servant à visser l'élément de fixation modulaire, l'outil (61) étant un embout de vissage qui est formé d'au moins deux éléments pouvant être vissés ensemble, une tige d'entraînement (62) et une tige entraînée (63).
